(19) Europäisches Patentamt
European Patent Office
Office européen des brevets

(11) **EP 2 715 314 B1**

(12) **EUROPÄISCHE PATENTSCHRIFT**

(45) Veröffentlichungstag und Bekanntmachung des Hinweises auf die Patenterteilung:
**10.08.2016  Patentblatt 2016/32**

(51) Int Cl.:
*G01N 7/10* (2006.01)      *G01N 13/04* (2006.01)
*G01L 19/06* (2006.01)      *F01N 3/20* (2006.01)
*F01N 11/00* (2006.01)

(21) Anmeldenummer: **12718107.1**

(22) Anmeldetag: **04.04.2012**

(86) Internationale Anmeldenummer:
**PCT/EP2012/056186**

(87) Internationale Veröffentlichungsnummer:
**WO 2012/159815 (29.11.2012 Gazette 2012/48)**

(54) **SENSOR ZUR DETEKTION DER QUALITÄT EINES FLUIDES**

SENSOR FOR DETECTING THE QUALITY OF A FLUID

CAPTEUR POUR DÉTECTER LA QUALITÉ D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.05.2011  DE 102011076496**

(43) Veröffentlichungstag der Anmeldung:
**09.04.2014  Patentblatt 2014/15**

(73) Patentinhaber: **Robert Bosch GmbH**
**70442 Stuttgart (DE)**

(72) Erfinder:
• **GLOECKLE, Markus**
  **70192 Stuttgart (DE)**
• **FRITSCH, Andreas**
  **71332 Waiblingen (DE)**

(56) Entgegenhaltungen:
**DE-A1- 2 163 640**      **DE-A1- 10 340 075**
**DE-C1- 3 736 230**      **US-A1- 2007 237 206**
**US-A1- 2009 320 573**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Zur Erfüllung der verschärften Abgasgesetzgebung müssen bei Verbrennungskraftmaschinen, insbesondere bei selbstzündenden Verbrennungskraftmaschinen, im Abgas enthaltende Stickoxide reduziert werden. Zur Durchführung der notwendigen Abgasnachbehandlung hat sich ein auf selektiver katalytischer Reduktion (SCR) basierendes Verfahren weitestgehend etabliert. Beim SCR-Verfahren werden die Stickoxide mittels eines Betriebs- und/oder Hilfsstoffs, insbesondere eines Reduktionsmittels zu Stickstoff und Wasser reduziert. Als Betriebs- und/oder Hilfsstoff wird häufig eine Harnstoff-Wasser-Lösung eingesetzt, die beispielsweise unter dem Markennamen AdBlue erhältlich ist. Durch thermische Zersetzung des Harnstoffs entsteht im Abgasstrang das eigentliche Reduktionsmittel, gasförmiges Ammoniak $NH_3$. Der Betriebs-und/oder Hilfsstoff wird in einem Tank bevorratet und über ein Fördermodul oder Dosiermodul in den Abgasstrang eingespritzt. Dabei ist es notwendig, dass vom Dosiermodul immer eine ausreichende Menge Reduktionsmittel eingespritzt wird. Um die korrekte Menge des benötigten Betriebs- und/oder Hilfsstoffs zu bestimmen, müssen dem Steuergerät die Eigenschaften des Betriebs- und/oder Hilfsstoffs genau bekannt sein. Weist die beispielsweise häufig verwendete Harnstoff-Wasser-Lösung einen zu geringen Harnstoffgehalt auf, entsteht im Abgasstrang nicht genügend Ammoniak, und die Stickoxide können nicht vollständig reduziert werden. Dies hat zur Folge, dass die gesetzlich festgelegten Abgasgrenzwerte überschritten werden. Ursachen für eine falsche Harnstoffkonzentration können beispielsweise das Tanken eines falschen Reduktionsmittels oder das absichtliche Tanken von destilliertem Wasser anstelle des Betriebs- und/oder Hilfsstoffs aufgrund dessen deutlich geringeren Preises sein. Da das Abgasnachbehandlungssystem das Einhalten der gesetzlichen Grenzwerte der Stickoxidemissionen zu jedem Zeitpunkt sicherstellen muss, ist es erforderlich, dass das Abgasnachbehandlungssystem falsch getankte Betriebs-/Hilfsstoffe erkennt, und deren Verwendung verhindert.

Aus der DE 10 2007 059 853 A1 ist ein Tank zur Bevorratung eines Betriebs- oder Hilfsstoffes bekannt, der mit Mitteln zum Messen des Füllstandes und der Qualität der getankten Flüssigkeit ausgestattet ist. Die Messung erfolgt dabei mittels eines Ultraschallwandlers, der Ultraschallsignale aussendet und die reflektierten Signale wieder empfängt. Aus den empfangenen Ultraschallechos lässt sich mit Hilfe der Kenntnis über die Temperatur unter anderem die Dichte der Flüssigkeit und der Füllstand berechnen. Durch Vergleich der Dichte mit gespeicherten Werten kann auf die Art bzw. die Qualität der getankten Flüssigkeit geschlossen werden.

Aus der DE 37 36 230 C1 ist ein Verfahren und eine entsprechende Vorrichtung zur selektiven Bestimmung des Gehalts eines bestimmten Stoffes in einer Lösung mittels einer osmotischen Zelle bekannt.

Ein anderer Ansatz zur Bestimmung der Qualität des getankten Betriebs- bzw. Hilfsstoffs ist die Messung der Effizienz des SCR-Katalysators bei der Stickoxidreduktion. Von Nachteil ist bei diesem Verfahren, dass eine schlechte Qualität des Reduktionsmittels erst mit Verzögerung, das heißt erst wenn die Abgasgrenzwerte nicht mehr eingehalten werden können entdeckt wird, sowie die allgemein geringe Genauigkeit dieser Messung.

Alle nach dem Stand der Technik bekannten Verfahren zur Messung der Qualität eines getankten Betriebs- und/oder Hilfsstoffs weisen einen vergleichsweise großen Aufwand und hohen Kosten auf.

Darstellung der Erfindung

Erfindungsgemäß wird eine Vorrichtung zur Messung der Qualität eines in einem Tank bevorrateten Betriebs- und/oder Hilfsstoffs, insbesondere eines Reduktionsmittels, vorgeschlagen, wobei ein Referenzbehälter mit dem Betriebsstoff und/oder Hilfsstoff über eine semipermeable Membran in Verbindung steht und der Referenzbehälter mit einem Medium gefüllt ist, welches einen bekannten osmotischen Druck relativ zum verwendeten Betriebsstoff und/oder Hilfsstoff aufweist. Der Zusammenhang zwischen osmotischem Druck der Konzentration eines Stoffes in einem Lösungsmittel gegenüber einem reinen Lösungsmittel und der Temperatur wird dabei vom Van-'t-Hoff'schem Gesetz beschrieben:

$$P_{osmotisch} = c \cdot R \cdot T$$

wobei

$P_{osmotisch}$ der osmotische Druck ist, c die Zahl aller gelösten, dissoziiert und undissoziiert vorliegenden Teilchen,
R die universelle Gaskonstante und
T die Temperatur in Kelvin
ist. Je nach verwendeten Referenzmedium und Tankinhalt ist der osmotische Druck zwischen dem Medium im Referenzbehälter und dem Betriebsstoff und/oder Hilfsstoff im Tank positiv, Null oder negativ.

Im Fall der Bevorratung eines Reduktionsmittels für die selektive katalytische Reduktion handelt es bei dem Betriebs- und/oder Hilfsstoffs insbesondere um eine Harnstoff-Wasser-Lösung. Eine Harnstoff-Wasser-Lösung mit bekannter Harnstoffkonzentration kann auch als Referenzmedium im Referenzbehälter zum Einsatz kommen. Durch die halbdurchlässige Membran kann Wasser zwischen dem Referenzbehälter und dem restlichen Tank hin und her diffundieren. Je nach Harnstoffkonzentration im Referenzbehälter und im restlichen Tank stellt sich im Referenzbehälter ein Unterdruck, Gleichdruck oder ein Überdruck ein. Befindet sich beispielsweise im Referenzbehälter eine Harnstoff-Wasser-Lösung mit bekannter Konzentration und wird der Tank anstelle mit der Harnstoff-Wasser-Lösung mit Wasser gefüllt, baut sich durch die Osmose ein Überdruck im Referenzbehälter auf.

Dieser Überdruck kann mit einem am Referenzbehälter angebrachten Drucksensor ermittelt werden. Ein Steuergerät, welches das Signal vom Drucksensor auswertet, kann dann geeignete Maßnahmen treffen, wie beispielsweise die Leistung des Antriebs reduzieren oder den Betrieb der Verbrennungskraftmaschine verhindern.

Erfindungsgemäss sind am Referenzbehälter ein oder mehrere flexible Elemente angebracht, welche sich durch Druckänderung im Referenzbehälter verformen und bei dieser Verformung den Ablauf des Tanks blockieren. Dadurch wird gewährleistet, dass ein falsch getankter Betriebsstoff und/oder Hilfsstoff nicht in die Abgasanlage gelangen kann.

Eine druckbedingte Verformung könnte jedoch auch verwendet werden, um ein mechanisches Element zum Verschließen des Tanks zu betätigen und/oder einen mechanischen Schalter zu betätigen.

Wenn der Referenzbehälter über ein flexibles Element den Tankablauf verschließen soll, ist es vorteilhaft, den Referenzbehälter mit einem geeigneten Befestigungsmittel fest im Tank anzuordnen. Wird vom Referenzbehälter jedoch lediglich ein Signal generiert, sei es über einen Drucksensor oder über einen am Referenzbehälter befestigten mechanischen Schalter, kann der Referenzbehälter auch lose im Tank angeordnet werden.

In einer weiteren vorteilhaften Ausführungsform ist der Referenzbehälter nicht im Tank zur Bevorratung des Betriebsstoffs und/oder Hilfsstoffs selber angeordnet, sondern in einer von diesen abgehenden Leitung. Dabei wird der Referenzbehälter möglichst klein ausgeführt und bevorzugt an einer Stelle angeordnet, die von außen schwer zugänglich ist. Dadurch werden Manipulationen des Referenzbehälters erschwert.

Als weiterer Schutz vor Manipulationen von außen aber auch um den Referenzbehälter frostsicher zu machen, kann der Behälter durch eingearbeitete Metallplatten oder Fasern verstärkt werden. Besonders bevorzugt werden für den Frostschutz ein oder mehrere Verdrängungskörper in den Referenzbehälter eingebaut um eine Volumenvergrößerung durch gefrierenden Inhalt des Behälters aufnehmen zu können. In einer weiteren vorteilhaften Ausführungsform wird die Frostsicherheit dadurch gewährleistet, dass ein Referenzmedium mit einem Gefrierpunkt unterhalb der tiefsten erwarteten Temperatur eingesetzt wird.

In einer weiteren bevorzugten Ausführungsform wird dem Referenzmedium im Referenzbehälter ein Farbstoff zugegeben, mit dem insbesondere ein Anbohren des Behälters leicht nachgewiesen werden kann. Ein Anbohren des Behälters würde einen Druckausgleich zwischen dem Referenzbehälter und dem Tank ermöglichen und damit keine Messung der Qualität des getankten Betriebsstoffes und/oder Hilfsstoffes erlauben. Wird ein Referenzbehälter, dessen Referenzmedium ein Farbstoff enthält, angebohrt, gelangt der Farbstoff in den Tankinhalt. Durch die Färbung des Tankinhaltes, die sich bevorzugt auch als Färbung des Abgases der Verbrennungskraftmaschine zeigt, kann die Manipulation leicht nachgewiesen werden. In einer weiteren Ausführungsform wird die semipermeable Membran des Referenzbehälters so ausgeführt, dass sie bei Überschreitung eines Grenzdrucks birst. Eine Fehlbetankung würde dabei zu einem Druckanstieg im Referenzbehälter führen, der über dem eingestellten Grenzdruck der semipermeablen Membran liegt, und der im Referenzmedium enthaltene Farbstoff würde abgegeben werden.

In einer weiteren bevorzugten Ausführungsform werden zur Kontrolle des Referenzbehälters Messwerte von üblicherweise bereits vorhandenen Sensoren wie eines Füllstandssensors im Tank oder eines Drucksensors im Fördermodul mit einbezogen. Beim Bewegen des Fahrzeugs auftretende Schwappbewegungen im Tank führen zu kleinen Schwankungen im Füllstand der getankten Flüssigkeit, die sich auch über kleine Druckschwankungen im Referenzbehälter messen lassen. Fehlen diese Druckschwankungen im Referenzbehälter, deutet dies auf eine Manipulation oder einen ausgefallenen Sensor hin. Weiter ist es bevorzugt, das Referenzmedium im Referenzbehälter so zu wählen, dass sich auch beim richtigen Betriebs- und/oder Hilfsstoff im Tank dauerhaft ein Über- oder Unterdruck im Referenzbehälter einstellt. Dieser gemessene Über- oder Unterdruck im Referenzbehälter dient dabei zur Kontrolle der Funktion des Drucksensors.

Vorteile der Erfindung

Die erfindungsgemäße Vorrichtung zur Messung der Qualität eines in einem Tank bevorrateten Betriebsstoffes und/oder Hilfsstoffes erlaubt durch seinen einfachen Aufbau eine sichere und kostengünstige Messung der Qualität des bevorrateten Betriebsstoffes und/oder Hilfsstoffes. Eine Fehlbetankung wird zuverlässig erkannt und ein Betrieb der Verbrennungskraftmaschine kann bei falschem oder qualitativ minderwertigem Betriebsstoff und/oder Hilfsstoff verhindert werden, um eine Einhaltung der gesetzlich vorgeschriebenen Abgasgrenzwerte jederzeit garantieren zu können. Durch die Möglichkeit, den Tankablauf bei Fehlbetankung zu verschließen, wird das Abgasbehandlungssystem wirksam vor eventuellen Schäden durch einen fehlbetankten Betriebs- und/oder Hilfsstoff geschützt. Die erfindungsgemäße Vorrichtung lässt sich durch den Einsatz eines temperaturangepassten Referenzmediums und/oder von Verdrängungskörpern in einfacher Weise frostsicher ausführen, was den Einsatz der Vorrichtung in Regionen mit tiefen Umgebungstemperaturen ohne großen Aufwand und weitere Kosten ermöglicht. Auch die in den weiteren Ausführungsformen mögliche Manipulationssicherheit des Systems trägt zur erhöhten Sicherheit gegenüber den aus dem Stand der Technik bekannten Systemen bei.

Kurze Beschreibung der Zeichnungen

Anhand der Zeichnungen wird die Erfindung nachstehend eingehender beschrieben.

Es zeigt:

Figur 1      eine erste Ausführungsvariante der erfindungsgemäßen Vorrichtung zur Messung der Qualität eines in einem Tank bevorrateten Betriebsstoffes und/oder Hilfsstoffes bei der der Referenzbehälter im Tank angeordnet ist,

Figur 2a      zeigt den Referenzbehälter der erfindungsgemäßen Vorrichtung mit einem Drucksensor,

Figur 2b      zeigt den Referenzbehälter der erfindungsgemäßen Vorrichtung mit einem mechanischen Schalter,

Figur 3      zeigt eine weitere Ausführungsform der erfindungsgemäßen Vorrichtung bei der der Referenzbehälter mit einem flexiblen Element im Tank fest über dem Tankablauf angeordnet ist und

Figur 4      zeigt eine weitere Ausführungsform der erfindungsgemäßen Vorrichtung bei der der Referenzbehälter an einer vom Tank abgehenden Leitung angeordnet ist.

Ausführungsvarianten

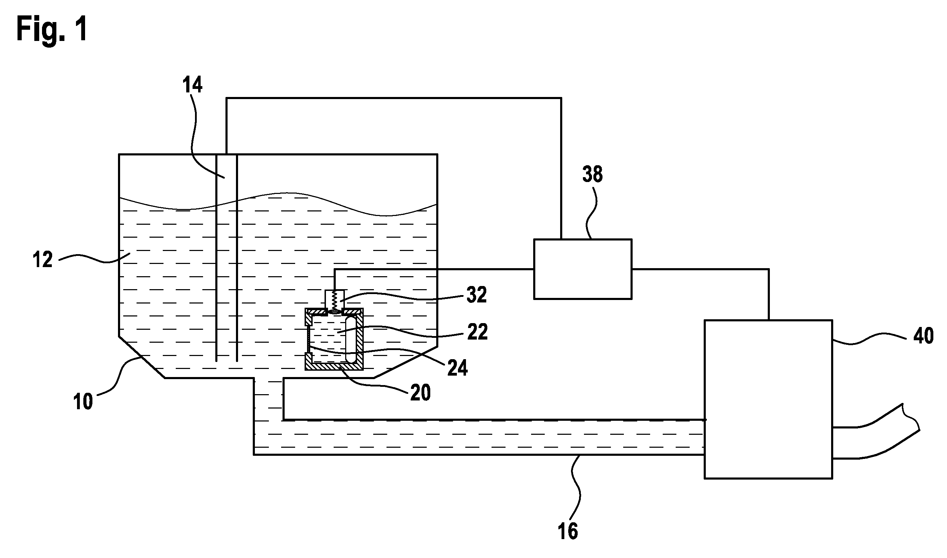

Der Figur 1 ist eine schematische Darstellung der Vorrichtung zur Messung der Qualität eines in einem Tank bevorrateten Betriebsstoffes und/oder Hilfsstoffes zu entnehmen.

Figur 1 zeigt einen Tank 10 zur Bevorratung eines Betriebsstoffes und/oder Hilfsstoffes 12. In dem Tank 10 befindet sich ein Füllstandssensor 14 und ein Referenzbehälter 20. Der Betriebsstoff und/oder Hilfsstoff fließt über eine Leitung 16 zu einem Dosiermodul 40. Der Referenzbehälter weist eine semipermeable Membran 24 auf, durch die Wasser zwischen dem Tank und dem Referenzbehälter diffundieren kann. Der Referenzbehälter ist mit einem Referenzmedium 22 gefüllt. Der sich zwischen Referenzbehälter 20 und Tank 10 einstellende osmotische Druck ist abhängig von dem getankten Betriebsstoff und/oder Hilfsstoff 12 und dem im Referenzbehälter 20 verwendeten Referenzmedium 22. Der Druck im Referenzbehälter 20 wird über einen Drucksensor 32 gemessen und an ein Steuergerät 38 weitergeleitet. Sind beispielsweise sowohl der Tank 10 als auch der Referenzbehälter 20 mit einer Harnstoff-Wasser-Lösung befüllt, wobei beide die gleiche Harnstoffkonzentration aufweisen, ist der Druck ausgeglichen. Wird nun beispielsweise der Tank 10 anstelle mit einer Harnstoff-Wasser-Lösung nur mit destilliertem Wasser befüllt, diffundiert Wasser durch die semipermeable Membran 24 aus dem Tank 10 in den Referenzbehälter 20 hinein und der Druck im Referenzbehälter 20 steigt. Bei Überschreitung eines Grenzwerts kann das Steuergerät 38 geeignete Maßnahmen treffen, wie beispielsweise den Betrieb der Verbrennungskraftmaschine verhindern oder durch Stilllegung des Dosiermoduls 40 das Einspritzen einer fehlgetankten Flüssigkeit in die Abgasanlage verhindern.

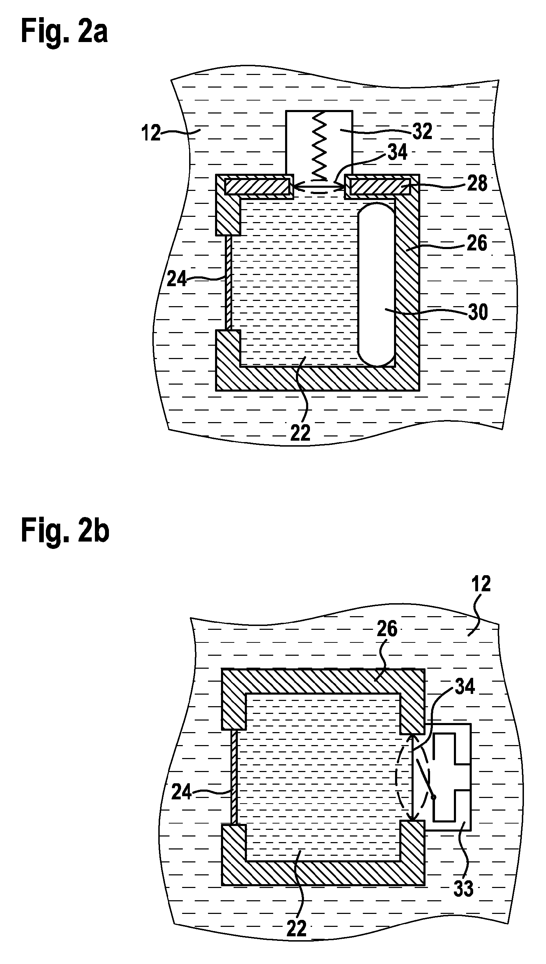

Figur 2a zeigt eine Detaildarstellung des Referenzbehälters der Vorrichtung zur Messung der Qualität eines in einem Tank bevorrateten Betriebsstoffes und/oder Hilfsstoffes.

Figur 2a zeigt den Referenzbehälter 20 in dessen Wand 26 die semipermeable Membran 24 eingelassen ist. Für den Fall des Einsatzes einer Harnstoff-Wasser-Lösung ist diese Membran 24 beispielsweise für Wasser durchlässig, für den Harnstoff jedoch nicht. Im Inneren des Referenzbehälters 20 befindet sich das Referenzmedium 22, welches beispielsweise ebenfalls eine Harnstoff-Wasser-Lösung sein kann. Da die üblicherweise verwendete eutektische Harnstoff-Wasser-Lösung bei Temperaturen unterhalb von -11 °C gefriert, ist es bevorzugt den Referenzbehälter 20 frostsicher auszuführen. Dies kann beispielsweise über Verstärkungen der Wände 26 oder das Einbauen von Metallplatten 28 durchgeführt werden. Die Wände 26 des Referenzbehälters 20 können jedoch auch durch Erhöhen der Wandstärke oder durch den Einbau von Fasern verstärkt werden. Die beim Einfrieren der Harnstoff-Wasser-Lösung erfolgende Volumenzunahme kann über den Einsatz eines Verdrängungskörpers 30 ausgeglichen werden. Der Verdrängungskörper 30 ist elastisch ausgeführt und wird durch das Eis zusammengedrückt. Der Druck im Referenzbehälter 20 wird von einem Drucksensor 32 gemessen, der in dem in Figur 2a dargestellten Ausführungsbeispiel über eine Membran 34 von dem Referenzmedium 22 getrennt ist. Die Membran 34 wird bei einem Überdruck im Referenzbehälter 20 nach oben ausgelenkt, bei einem Unterdruck im Referenzbehälter 20 nach unten ausgelenkt. Durch die Membran 34 wird vermieden, dass ein aggressives Referenzmedium 22, wie beispielsweise eine Harnstoff-Wasser-Lösung den Sensor 32 angreift. Wird ein gegen das Referenzmedium 22 resistenter Sensor 32 eingesetzt, kann die Membran 34 auch entfallen.

Figur 2b zeigt eine Detaildarstellung des Referenzbehälters mit einem mechanischen Schalter.

Figur 2b zeigt den Referenzbehälter 20, in dessen Wand 26 die semipermeable Membran 24 eingelassen ist. Für den Fall des Einsatzes einer Harnstoff-Wasser-Lösung ist diese Membran 24 beispielsweise für Wasser durchlässig, für den Harnstoff jedoch nicht. Durch eine Membran 34 vom Inneren des Referenzbehälters 20 abgetrennt, ist ein mechanischer Schalter 33 am Referenzbehälter 20 derart angeordnet, dass eine Auslenkung der Membran 34 den Schalter betätigt. Im Inneren des Referenzbehälters 20 befindet sich das Referenzmedium 22, welches beispielsweise ebenfalls eine Harnstoff-Wasser-Lösung sein kann. Im Fall einer Harnstoff-Wasser-Lösung als Hilfs- und Betriebsstoff 12 würde der Druck ansteigen, wenn anstelle einer Harnstoff-Wasser-Lösung destilliertes Wasser getankt würde. Der sich durch die Fehlbetankung im Inneren des Referenzbehälters 20 einstellende Überdrück lenkt die Membran 34 aus und betätigt dabei den mechanischen Schalter 33. Dessen Signal kann genutzt werden, um geeignete Maßnahmen zu ergreifen, wie beispielsweise die Leistung der Verbrennungskraftmaschine reduzieren, oder deren Betrieb zu verhindern.

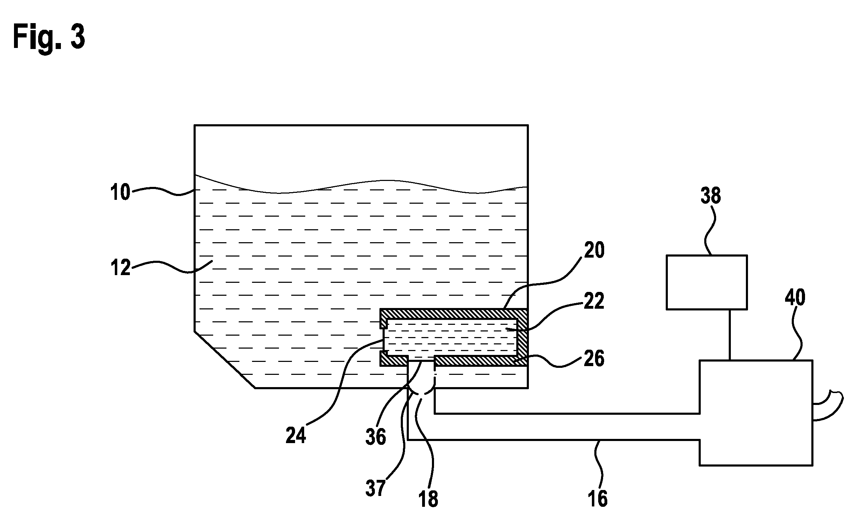

Figur 3 zeigt eine weitere Ausführungsform der erfindungsgemäßen Vorrichtung bei der der Referenzbehälter mit einem flexiblen Element ausgestattet ist.

Bei der in Figur 3 dargestellten Ausführungsform der erfindungsgemäßen Vorrichtung zur Messung der Qualität eines in einem Tank bevorrateten Betriebsstoffes und/oder Hilfsstoffes 12 ist der Referenzbehälter 20 fest in dem Tank 10 über dem Ablauf 18 des Tanks angeordnet, über dem der Betriebsstoff und/oder Hilfsstoff 12 aus dem Tank 10 in die Leitung 16 gelangt. Der Referenzbehälter 20 weist in der Gehäusewand 26 eine semipermeable Membran 24 auf, durch die beispielsweise bei der Verwendung einer Harnstoff-Wasser-Lösung als Betriebsstoff und/oder Hilfsstoff 12 wasserdurchlässig ausgeführt ist. Als Referenzmedium 22 im Referenzbehälter 20 kann ebenfalls eine Harnstoff-Wasser-Lösung eingesetzt werden. Der Referenzbehälter 20 weist an einer direkt über dem Tankablauf 18 gelegenen Stelle ein flexibles Element 36 auf, welches sich unter Druck verformen kann. Wird in diesem Beispiel anstelle einer Harnstoff-Wasser-Lösung als Betriebs- und/oder Hilfsstoff 12 nur destilliertes Wasser getankt, steigt im Referenzbehälter 20 der Druck aufgrund von Osmose an. Durch den erhöhten Druck wird das flexible Element 36 verformt und nimmt die in Figur 3 mit dem Bezugszeichen 37 bezeichnete Form ein. Dabei wird von dem flexiblen Element 36 der Tankablauf 18 blockiert. Dadurch wird verhindert, dass ein falsch getankter Betriebsstoff und/oder Hilfsstoff 12 über die Leitung 16 und das Dosiermodul 40 in das Abgassystem gelangen kann. Darüber hinaus kann das Steuergerät 38 diesen Fehlerzustand über im Dosiermodul 40 bereits vorhandene Sensoren erkennen. Die Blockade des Tankablaufs 18 kann anstelle des flexiblen Elements 36 bzw. 37 auch mit einem flexiblen Federelement oder mit einem anderen mechanischen Mittel, welches über einen Druckunterschied im Referenzbehälter betätigt wird, bewerkstelligt werden.

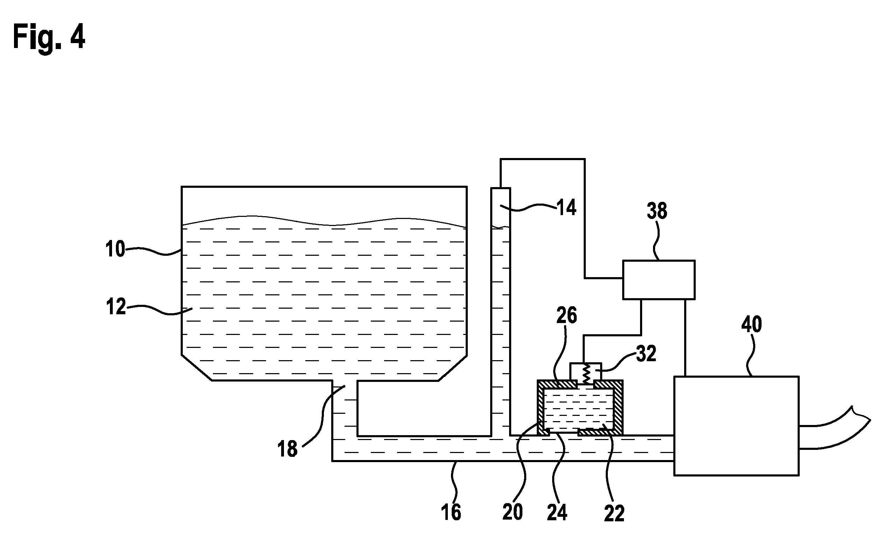

Figur 4 stellt eine weitere Ausführungsform der erfindungsgemäßen Vorrichtung dar, bei der der Referenzbehälter an einer vom Tank 10 abgehenden Leitung 16 angeordnet ist.

Figur 4 zeigt einen Tank 10 zur Bevorratung eines Betriebsstoffes und/oder Hilfsstoffes 12, welcher durch den Tankablauf 18 und einer Leitung 16 in das Fördermodul 40 fließt. An der Leitung 16 ist ein Füllstandssensor 14 und der Referenzbehälter 20 angeordnet. Der Referenzbehälter 20 weist eine semipermeable Membran 24 auf, die direkt mit dem Betriebsstoff und/oder Hilfsstoff 12 in der Leitung 16 in Verbindung steht. Im Inneren des Referenzbehälters 20 befindet sich das Referenzmedium 22. Der Druck im Inneren des Referenzbehälters 20 wird über einen Drucksensor 32 ermittelt, der seinen Messwert ebenso wie der Füllstandssensor 14 an ein Steuergerät 38 weiterleitet. Bei der Anwendung in einem SCR-System kommen beispielsweise sowohl als Betriebs- und/oder Hilfsstoff 12 als auch als Referenzmedium 22 eine Harnstoff-Wasser-Lösung zum Einsatz. Wird nun beispielsweise der Tank 10 mit destilliertem Wasser fehlbetankt, diffundiert Wasser aus der Leitung 16 in das Innere des Referenzbehälters 20 und lässt den Druck im Inneren ansteigen. Überschreitet der Druckanstieg, der vom Sensor 32 gemessen wird, einen kritischen Grenzwert, kann das Steuergerät 38 geeignete Maßnahmen ergreifen, wie beispielsweise durch Stilllegung des Fördermoduls 40 ein Einspritzen eines fehlgetankten Betriebsstoffes und/oder Hilfsstoffes 12 in die Abgasbehandlungsanlage verhindern. Um die vom Drucksensor 32 gelieferten Druckwerte zu plausibilisieren, das heißt gegen Manipulation und/oder Ausfall eines oder mehrerer Sensoren abzusichern, kann das Steuergerät 38 weitere Datenquellen, wie beispielsweise den Füllstandssensor 14 oder im Fördermodul 40 eingebaute Sensoren verwenden. Beispielsweise führen Bewegungen des Betriebsstoffes und/oder Hilfsstoffes 12 im Tank 10, die vom Füllstandssensor 14 wahrgenommen werden, auch zu geringfügigen Druckschwankungen, die vom Sensor 32 erfasst werden. Das Steuergerät 38 kann die Messwerte beider Sensoren miteinander verbinden und durch Ausbleiben der Druckschwankungen bzw. Füllstandsschwankungen auf den Ausfall und/oder die Manipulation eines der Sensoren schließen. Eine weitere Möglichkeit zur Plausibilisierung der Sensordaten besteht bei einem SCR-System, welches eine Harnstoff-Wasser-Lösung einsetzt darin, als Referenzmedium 22 eine Harnstoff-Wasser-Lösung mit gegenüber der im Tank 10 befindlichen Lösung geänderten Harnstoffkonzentration zu verwenden. Dies führt auch bei regulärer Betankung des Tanks 10 zu einem Überdruck oder Unterdruck im Referenzbehälter 20 der vom Sensor 32 detektiert werden muss. Ein Ausbleiben der Detektion des Überdrucks oder Unterdrucks deutet auf eine Manipulation des Sensors 32 oder des Referenzbehälters 20 hin. Beispielsweise würde ein angebohrter Referenzbehälter 20 einen ungehinderten Flüssigkeitsaustausch zwischen dem Innenraum des Referenzbehälters 20 und dem Tank 10 ermöglichen, so dass in keinem Fall ein Druckunterschied auftreten kann. Um eine Manipulation des Referenzbehälters 20 zu verhindern, ist es vorteilhaft, die Behälterwände 26 beispielsweise durch den Einbau von Metallplatten 28 zu verstärken und/oder den Referenzbehälter 20 an einer von außen nur schwer zugänglichen Stelle zu platzieren. Ebenfalls ist es vorteilhaft den Referenzbehälter 20 möglichst klein auszuführen, da er dann von außen nur schwer zu erreichen ist. Ein erfolgtes Anbohren des Referenzbehälters 20 ließe sich in einer Ausführungsform beispielsweise durch die Zugabe eines Farbstoffs in das Referenzmedium 22 nachweisen. Würde der Referenzbehälter 20 angebohrt werden, würde Farbstoff aus dem Inneren des Referenzbehälters 20 in den Tank 10 oder die Leitung 16 gelangen und den Tankinhalt 12 färben. Diese Färbung ist bevorzugt auch im Abgas nachweisbar.

**Patentansprüche**

1. Vorrichtung zur Messung der Qualität eines in einem Tank (10) bevorrateten Betriebsstoffes und/oder Hilfsstoffes (12), insbesondere eines Reduktionsmittels, wobei ein Referenzbehälter (20) mit dem Betriebsstoff und/oder dem Hilfsstoff (12) über eine semipermeable Membran (24) in Verbindung steht und der Referenzbehälter (20) mit einem Medium (22) gefüllt ist, welches einen bekannten osmotischen Druck relativ zum verwendeten Betriebsstoff und/oder Hilfsstoff (12) aufweist **dadurch gekennzeichnet, dass** die Vorrichtung des Weiteren

    a) ein Steuergerät (38) umfasst, welches eingerichtet ist, bei Überschreitung eines Grenzwerts für den Druck im Referenzbehälter (20) den Betrieb einer Verbrennungsmaschine zu verhindern, deren Leistung zu drosseln und/oder um ein Dosiermodul (40) zum Einspritzen des Betriebsstoffes und/oder Hilfsstoffes (12) stillzulegen, oder
    b) ein flexibles Element (36, 37) umfasst, welches eingerichtet ist, durch druckbedingte Verformung einen Tankablauf (18) des Tanks (10) zu verschließen.

2. Vorrichtung gemäß Anspruch 1, **dadurch gekennzeichnet, dass** der osmotische Druck zwischen dem Medium (22) im Referenzbehälter (20) und dem Betriebsstoff und/oder Hilfsstoff (12) im Tank (10) positiv, Null oder negativ sein kann.

3. Vorrichtung gemäß Anspruch 1 oder 2, **dadurch gekennzeichnet, dass** im Referenzbehälter (20) Mittel (32) zur Messung des Drucks angeordnet sind.

4. Vorrichtung gemäß einem der vorherigen Ansprüche, **dadurch gekennzeichnet, dass** die Vorrichtung des Weiteren einen Füllstandssensor (14) umfasst.

5. Vorrichtung gemäß Anspruch 1 oder 2, **dadurch gekennzeichnet, dass** durch druckbedingte Verformungen im Referenzbehälter (20) ein mechanisches Element (33) betätigt wird.

6. Vorrichtung gemäß einem der vorherigen Ansprüche, **dadurch gekennzeichnet, dass** der Referenzbehälter (20) innerhalb des Tanks (10) lose oder mit einem Befestigungsmittel fixiert angeordnet ist.

7. Vorrichtung gemäß einem der Ansprüche 1 bis 5, **dadurch gekennzeichnet, dass** der Referenzbehälter (20) in einer vom Tank (10) abgehenden Leitung (16) angeordnet ist.

8. Vorrichtung gemäß einem der vorherigen Ansprüche, **dadurch gekennzeichnet, dass** die Wände (26) des Referenzbehälters (20) durch verdickte Wände, eingearbeitete Metallplatten (28) und/oder Fasern verstärkt sind.

9. Vorrichtung gemäß einem der vorherigen Ansprüche, **dadurch gekennzeichnet, dass** das Medium (22) im Inneren des Referenzbehälters (20) mit einem Farbstoff versehen ist.

10. Verfahren zur Messung der Qualität eines in einem Tank (10) bevorrateten Betriebsstoffes und/oder Hilfsstoffes (12), insbesondere eines Reduktionsmittels, wobei die Messung über den Druck und/oder den Druckverlauf in einem Referenzbehälter (20), welcher mit dem Betriebsstoff und/oder Hilfsstoff (12) über eine semipermeable Membran (24) in Verbindung steht, erfolgt, **dadurch gekennzeichnet, dass** bei einer festgestellten Fehlbetankung ein Eindringen des fehlgetankten Betriebsstoffes und/oder Hilfsstoffes in eine Abgasbehandlungsanlage verhindert wird.

11. Verfahren gemäß Anspruch 10, **dadurch gekennzeichnet, dass** die Messwerte aus dem Referenzbehälter (20) über Messungen des Füllstands und/oder durch einen im Referenzbehälter (20) eingestellten Überdruck, Gleichdruck oder Unterdruck plausibilisiert werden.

**Claims**

1. Device for measuring the quality of a process material and/or auxiliary material (12), in particular a reducing agent, stored in a tank (10), wherein a reference container (20) is connected to the process material and/or auxiliary material (12) via a semi-permeable membrane (24), and the reference material (20) is filled with a medium (22) which has a known osmotic pressure relative to the process material and/or auxiliary material (12) used, **characterized in that** the device also comprises

a) a control unit (38) which is configured, in the event of a limiting value for the pressure in the reference container (20) being exceeded, to prevent the operation of an internal combustion engine, to throttle the power thereof and/or to deactivate a metering module (40) for injecting the process material and/or auxiliary material (12), or

b) a flexible material (36, 37) which is configured to close off a tank outflow (18) of the tank (10) by pressure-induced deformation.

2. Device according to Claim 1, **characterized in that** the osmotic pressure between the medium (22) in the reference container (20) and the process material and/or auxiliary material (12) in the tank (10) can be positive, zero or negative.

3. Device according to Claim 1 or 2, **characterized in that** means (32) for measuring the pressure are arranged in the reference container (20).

4. Device according to one of the preceding claims, **characterized in that** the device also comprises a filling level sensor (14).

5. Device according to Claim 1 or 2, **characterized in that** a mechanical element (33) is activated in the reference container (20) by pressure-induced deformations.

6. Device according to one of the preceding claims, **characterized in that** the reference container (20) is arranged loosely inside the tank (10) or is arranged fixedly with an attachment means.

7. Device according to one of Claims 1 to 5, **characterized in that** the reference container (20) is arranged in a line (16) which exits the tank (10).

8. Device according to one of the preceding claims, **characterized in that** the walls (26) of the reference container (20) are reinforced by thickened walls, incorporated metal plates (28) and/or fibres.

9. Device according to one of the preceding claims, **characterized in that** the medium (22) in the interior of the reference container (20) is provided with a colouring agent.

10. Method for measuring the quality of a process material and/or auxiliary material (12), in particular of a reducing agent, stored in a tank (10) wherein the measurements is carried out by means of the pressure and/or the pressure profile in a reference container (20) which is connected to the process material and/or auxiliary material (12) via a semi-permeable membrane (24), **characterized in that** when incorrect filling is detected, penetration of the incorrectly filled process material and/or auxiliary material into an exhaust gas treatment system is prevented.

11. Method according to Claim 10, **characterized in that** the plausibility of the measured values from the reference container (20) is checked by means of measurements of the filling level and/or by means of an excess pressure, equivalent pressure or underpressure which is set in the reference container (20).

**Revendications**

1. Dispositif pour mesurer la qualité d'une substance consommable et/ou d'une substance auxiliaire (12), notamment d'un agent réducteur, stockée dans un réservoir (10), un récipient de référence (20) se trouvant en liaison avec la substance consommable et/ou la substance auxiliaire (12) par le biais d'une membrane (24) semi-perméable et le récipient de référence (20) étant rempli d'un fluide (22) qui présente une pression osmotique connue par rapport à la substance consommable et/ou la substance auxiliaire (12) utilisée, **caractérisé en ce que** le dispositif comprend en outre

a) un contrôleur (38) qui est conçu pour, en cas de dépassement d'une valeur de seuil pour la pression dans le récipient de référence (20), empêcher le fonctionnement d'une machine à combustion interne, restreindre sa puissance et/ou pour immobiliser un module de dosage (40) servant à l'injection de la substance consommable et/ou de la substance auxiliaire (12), ou

b) un élément flexible (36, 37) qui est conçu pour se fermer par déformation liée à la pression d'un écoulement de réservoir (18) du réservoir (10).

2. Dispositif selon la revendication 1, **caractérisé en ce que** la pression osmotique entre le fluide (22) dans le récipient de référence (20) et la substance consommable et/ou la substance auxiliaire (12) dans le réservoir (10) peut être positive, nulle ou négative.

3. Dispositif selon la revendication 1 ou 2, **caractérisé en ce que** des moyens (32) servant à mesurer la pression sont disposés dans le récipient de référence (20).

4. Dispositif selon l'une des revendications précédentes, **caractérisé en ce que** le dispositif comprend en outre un détecteur de niveau (14).

5. Dispositif selon la revendication 1 ou 2, **caractérisé en ce qu'**un élément mécanique (33) est actionné par des déformations liées à la pression dans le récipient de référence (20).

6. Dispositif selon l'une des revendications précédentes, **caractérisé en ce que** le récipient de référence (20) est disposé à l'intérieur du réservoir (10) de manière détaché ou fixé avec un moyen de fixation.

7. Dispositif selon l'une des revendications 1 à 5, **caractérisé en ce que** le récipient de référence (20) est disposé dans une conduite (16) partant du réservoir (10).

8. Dispositif selon l'une des revendications précédentes, **caractérisé en ce que** les parois (26) du récipient de référence (20) sont renforcées par des parois épaissies, des plaques métalliques (28) incorporées et/ou des fibres.

9. Dispositif selon l'une des revendications précédentes, **caractérisé en ce que** le fluide (22) à l'intérieur du récipient de référence (20) est pourvu d'un colorant.

10. Procédé de mesure de la qualité d'une substance consommable et/ou d'une substance auxiliaire (12), notamment d'un agent réducteur, stockée dans un réservoir (10), la mesure étant effectuée par le biais de la pression et/ou de la courbe de pression dans un récipient de référence (20) qui se trouve en liaison avec la substance consommable et/ou la substance auxiliaire (12) par le biais d'une membrane (24) semi-perméable, **caractérisé en ce que** lors d'une erreur d'avitaillement constatée, une pénétration de la substance consommable et/ou de la substance auxiliaire avitaillée par erreur dans un équipement de traitement des gaz de combustion est empêchée.

11. Procédé selon la revendication 10, **caractérisé en ce que** la plausibilité des valeurs mesurées du récipient de référence (20) est vérifiée par le biais de mesures du niveau et/ou par le biais d'une surpression, d'une pression constante ou d'une dépression réglée dans le récipient de référence (20).

**Fig. 1**

## Fig. 2a

## Fig. 2b

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007059853 A1
- DE 3736230 C1